# DEMANDE DE BREVET EUROPEEN

(11) **EP 1 901 416 A2**
(43) Date de publication de la demande: **19.03.2008**
(21) Numéro de dépôt: 07024072.6
(22) Date de dépôt: 12.07.2001
(51) Int. Cl.: H02K 15/02, H02K 15/12, H02K 1/12, H02K 1/18

(54) **Stator de machine électrique tournante**

(30) Priorité: 17.07.2000 FR 0009370
(62) Demande divisionnaire de: 01116996.8
(71) Demandeur: Michelin Recherche et Technique S.A., 1763 Granges-Paccot (CH); M.F.P. Michelin, 63040 Clermont Ferrand Cedex 9 (FR)
(72) Inventeur: Laurent, Daniel, 1723 Marly (CH); Linda, Jean-Lous, 1635 La Tour de Treme (CH); Genoud, Fernand, 1617 Saint Legier (CH); Pegoraro, Giancarlo, 1806 Saint Legier (CH)
(74) Mandataire: Bauvir, Jacques

(57) **Abrégé**

La machine électrique tournante comprenant un stator (S) extérieur dont le circuit magnétique feuilleté comporte un empilage de culasses (11) réalisées chacune dans une tôle magnétique et disposées sensiblement parallèlement à un plan perpendiculaire à l'axe et comporte une pluralité de dents (10) disposées à l'intérieur des culasses (11), les dents étant réalisées chacune dans une tôle magnétique et disposées sensiblement parallèlement à un plan perpendiculaire à l'axe, les dents étant empilées et les empilages de dents délimitant des encoches (50), les dents (10) étant rendues solidaires des culasses par collage à la résine (6).

## Description

La présente invention se rapporte aux machines électriques tournantes, et plus particulièrement au stator d'une machine électrique dont le rotor est situé à l'intérieur du stator.

Le stator comporte un circuit magnétique et des bobinages de fils conducteurs de l'électricité, réalisés en général en fil de cuivre isolé, souvent de section ronde. Le circuit magnétique quant à lui est toujours feuilleté ; il est constitué par un empilage de tôles magnétiques. Chaque tôle est découpée de façon à aménager des encoches séparées par des dents, les encoches étant le logement des fils conducteurs électriques. Chaque encoche est limitée par deux parois orientées sensiblement radialement, un fond d'encoche et comporte une ouverture, l'ouverture étant située sur un rayon plus petit que le rayon auquel se situe le fond d'encoche. Ce principe d'agencement du stator est largement appliqué pour les machines synchrones ou asynchrones.

L'installation des bobinages électriques dans les encoches conduit à insérer des conducteurs électriques (ou des tronçons de conducteurs électriques) en passant par l'ouverture de l'encoche. Or rappelons que dans le type de moteur visé ici, cette ouverture d'encoche est orientée vers l'intérieur et est donc peu accessible. En outre, l'ouverture d'encoche est en général assez étroite par rapport à la largeur de l'encoche. En effet, l'optimisation mécanique et magnétique conduit à terminer chaque dent (du côté des petits rayons) par un pied fermant partiellement l'ouverture de l'encoche.

Il n'est donc pas simple d'insérer les conducteurs électriques dans les encoches en passant par cette ouverture assez exiguë. Ceci conduit à des taux de remplissage des encoches par les conducteurs électriques qui restent relativement modestes, notamment si la machine électrique est longue.

Il a déjà été proposé, dans le document US 2 607 816, d'insérer des bobinages dans les encoches par l'extérieur et non pas par l'intérieur. Par ailleurs, le document US 5 220 233 propose de refroidir une machine électrique par un liquide caloporteur.

Or le dimensionnement d'une machine électrique tournante dépend de son couple nominal. Plus le couple nominal qu'un moteur est capable de délivrer est élevé, plus le moteur électrique est volumineux, toutes autres choses égales par ailleurs.

Il existe des applications pour lesquelles il est désirable d'atteindre à la fois des puissances importantes et une grande compacité du moteur. Pour donner simplement un exemple concret, lorsque l'on souhaite implanter des moteurs électriques de traction dans les roues de véhicules automobiles, il est souhaitable de pouvoir développer des puissances valant au moins 10 kW par moteur, et même la plupart du temps au moins 25 ou 30 kW par moteur, pour un poids le plus faible possible afin de ne pas trop alourdir les masses non suspendues. Il est également désirable que l'encombrement soit aussi très réduit, ne dépassant pas ou dépassant le moins possible du volume intérieur de la roue pour ne pas interférer avec les éléments du véhicule lors des débattements de suspension et lors d'autres types de mouvement de la roue par rapport à la caisse du véhicule.

Ces deux impératifs (puissance élevée, encombrement et poids faibles) rendent très problématique l'implantation de moteurs électriques de traction dans les roues de véhicules de tourisme, sauf à améliorer radicalement le rapport poids/puissance des machines électriques actuellement disponibles sur le marché.

L'invention a pour objectif de faciliter et d'optimiser la construction des moteurs électriques. Ceci est tout particulièrement important si l'on veut élever la puissance spécifique d'une machine électrique tournante, c'est-à-dire la puissance mécanique qu'un moteur est capable de développer pour une masse globale donnée ou la puissance électrique qu'un alternateur est capable de débiter pour une masse globale donnée.

L'invention concerne les machines électriques dont le circuit magnétique statorique est réalisé en deux parties : une partie intérieure comprenant les dents et une partie extérieure, enveloppe des dents et encoches. Dans ce circuit magnétique, chaque dent séparant deux encoches ne forme pas une pièce continue avec la périphérie extérieure du circuit magnétique. Bien entendu, le circuit magnétique est feuilleté et il est fabriqué à partir de tôles ferromagnétiques pour les raisons bien connues de l'homme du métier. On peut ainsi former un noyau comportant la partie intérieure du circuit magnétique, sur lequel on peut bobiner les fils conducteurs dans les encoches en ayant accès à ces encoches par l'extérieur. Ensuite, on recouvre la partie intérieure par la partie extérieure pour terminer le circuit magnétique.

Un objectif de l'invention est d'améliorer conjointement la dissipation vers l'extérieur des calories générées par le moteur. L'invention propose d'utiliser un circuit de refroidissement par canalisation dans laquelle circule un fluide caloporteur, ce qui, malgré la résistance thermique due au circuit magnétique statorique en deux parties, qui permet un meilleur remplissage d'encoche par le cuivre, permet de limiter suffisamment l'échauffement du moteur, et permet donc d'obtenir un bon rendement et/ou une puissance massique élevée.

Pour construire des machines de très grande puissance par unité de masse, et/ou pour construire des machines de très bon rendement, il y a intérêt à remplir de cuivre au maximum la section d'encoche disponible. A section d'encoche donnée, une augmentation de la section de cuivre entraîne une diminution des pertes par effet Joule pour un courant (donc un couple) donné. Par ailleurs, l'échauffement est moindre. Le rendement de la machine s'en trouve donc amélioré. Suivant une autre approche, à une température maximale admissible donnée, correspond un courant plus élevé (donc un couple plus élevé), ce qui améliore le rapport poids/puissance de la machine.

On peut encore considérer que, à section de cuivre donnée, on peut diminuer la section de l'encoche, donc diminuer la masse du circuit de fer. En effet, toutes autres choses égales par ailleurs, notamment la température maximale admissible dans la machine, on peut par exemple diminuer la hauteur (dimension mesurée dans le sens radial) des encoches. La masse de fer a donc diminué, les pertes fer s'en trouvent amoindries, donc la puissance massique de la machine et son rendement s'en trouve améliorés.

L'invention propose une machine électrique tournante comprenant un stator extérieur et un rotor ayant un axe géométrique de rotation et disposé à l'intérieur du stator, ledit stator comprenant un circuit magnétique feuilleté comportant :
- un empilage de culasses réalisées chacune dans une tôle magnétique et disposées sensiblement parallèlement à un plan perpendiculaire à l'axe, l'empilage formant une enveloppe extérieure ;
- une pluralité de dents disposées à l'intérieur de l'enveloppe, faisant protubérance vers l'intérieur, les dents étant réalisées chacune dans une tôle magnétique et disposées sensiblement parallèlement à un plan perpendiculaire à l'axe, les dents étant empilées et les empilages de dents délimitant des encoches, les dents étant rendues solidaires de l'enveloppe ; les encoches étant délimitées du côté radialement extérieur par les culasses, les encoches étant délimitées dans la direction circonférentielle par les parois latérales des dents, des fils conducteurs électriques étant disposés dans les encoches, et comportant un empilage de tôles en étoile réalisées chacune dans une tôle magnétique et disposées sensiblement parallèlement à un plan perpendiculaire à l'axe, l'ensemble des dents apparaissant sur chaque tôle en étoile, l'ensemble des dents étant reliées entre elles par une cloison fermant l'encoche du côté radialement intérieur de l'encoche.

Suivant l'invention, il est proposé de réaliser un moteur dont les encoches ne sont pas ouvertes sur l'entrefer séparant le rotor du stator. Le couple créé dans le moteur est le résultat de l'interaction entre le flux créé au rotor (par les aimants ou électroaimants dans le cas d'une machine synchrone) et le flux créé au stator par la circulation de courants dans les bobinages du stator. Il est nécessaire que les lignes de flux provenant du rotor embrassent le flux créé au stator. Il est communément admis que ce résultat est atteint parce que la base des encoches du stator est ouverte vers l'axe de la machine électrique, ce qui évite un court-circuit magnétique pour le flux provenant des aimants ou provenant des bobinages du stator. Par ailleurs, pour améliorer la tenue mécanique du cuivre dans les encoches, il est courant de prévoir des pieds d'encoches. Ceux-ci doivent être suffisamment épais, typiquement de l'ordre de 0,7 à 0,9 mm, faute de quoi les pieds d'encoche seraient trop fragiles pour contenir les fils de cuivre à l'intérieur de l'encoche.

Contrairement à la construction communément admise, dans cet aspect de l'invention, les pieds d'encoche sont fermés par le circuit magnétique sur la totalité de la périphérie intérieure du stator. Une cloison de très faible épaisseur du côté radialement intérieur de l'encoche, par exemple inférieure à 0,5 mm, et de préférence inférieure à 0,4 mm, suffit à lui conférer une grande robustesse mécanique du fait que la cloison est continue. De par sa faible épaisseur, on atteint une très forte saturation magnétique. Il en résulte que le flux de fuite traversant cette cloison reste très faible, sans conséquence notable sur le couple moteur. Par ailleurs, l'épaisseur de la cloison au pied d'encoche étant plus faible que dans les dispositions courantes des pieds d'encoche pour les encoches ouvertes, il en résulte un gain en section d'encoche disponible pour installer du cuivre. On peut donc installer plus de cuivre, toutes autres choses égales par ailleurs.

Comme déjà expliqué, pour construire des machines de très grande puissance par unité de masse, il y a intérêt à remplir de cuivre au maximum la section d'encoche disponible, ce que l'invention facilite. Toutes autres choses égales par ailleurs, notamment le niveau de saturation dans le circuit magnétique, on peut par exemple diminuer la hauteur des encoches.

L'invention sera mieux comprise par la description suivante, non limitative, en se référant au dessin annexé sur lequel :
La figure 1 est une coupe montrant une machine électrique tournante selon l'invention dans son ensemble, coupe effectuée selon le plan de coupe I-I à la figure 2, passant par l'axe de la machine tournante ;
La figure 2 est une coupe selon le plan de coupe II-II à la figure 1, perpendiculaire à l'axe de la machine tournante, illustrant le stator de la machine selon l'invention ;
La figure 3 est un agrandissement de la zone identifiée par le cercle III à la figure 2 ;
La figure 4 est une coupe comparable à celle de la figure 2, illustrant une variante de réalisation de l'invention ;
La figure 5 est un agrandissement de la zone identifiée par le cercle V à la figure 4 ;
Les figures 6 et 7 illustrent une phase initiale de la fabrication de la partie intérieure du circuit magnétique ;
La figure 8 illustre une phase ultérieure de la fabrication de la partie intérieure du circuit magnétique ;
Les figures 9 et 10 illustrent une variante de réalisation de l'invention ;
La figure 11 illustre la phase de bobinage ;
Les figures 12 et 13 illustrent une phase initiale de la fabrication de la partie extérieure du circuit magnétique ;
La figure 14 illustre l'assemblage des deux parties formant le stator.

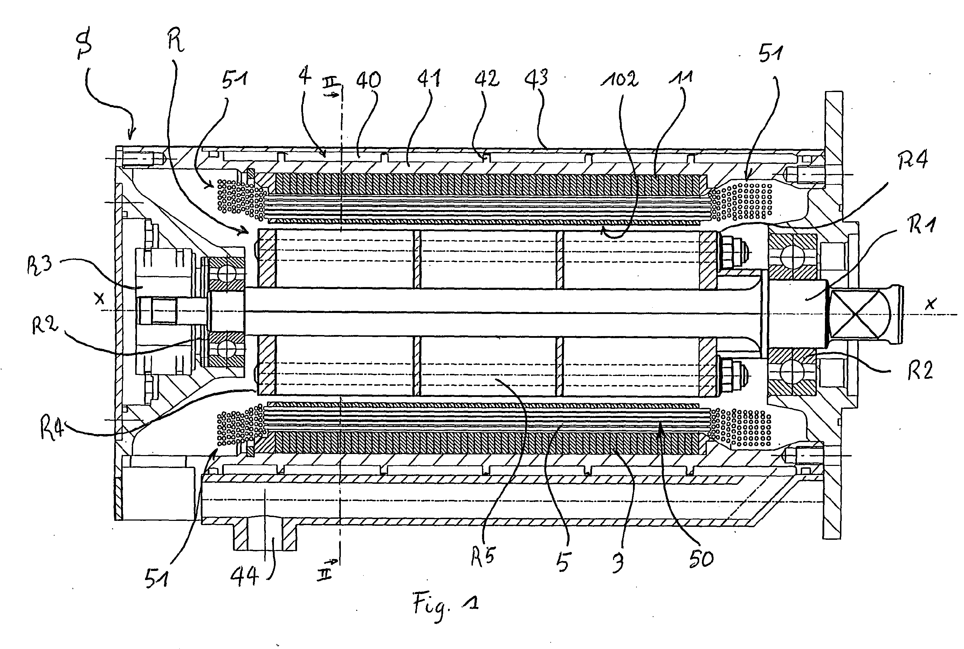

A la figure 1, on voit une machine électrique contenant un stator S et un rotor R séparés par un entrefer de très faible épaisseur, la figure étant une coupe dans un plan contenant l'axe XX. L'axe géométrique XX est l'axe de rotation du rotor. Le rotor R comporte un arbre R1 monté par deux paliers R2 dans le stator S. On voit aussi un codeur/résolveur R3 monté à l'une des extrémités de l'arbre R1. De part et d'autre de l'arbre R1, axialement, on voit un flasque latéral R4, situé de chaque côté de pièces polaires. Un tirant R5 traverse chaque pièce polaire et permet de les enserrer entre les flasques R4. Des aimants permanents (non représentés) sont disposés dans les logements entre les pièces polaires. Pour plus de détails sur la construction du rotor illustré, le lecteur est invité à consulter par exemple la demande de brevet EP 1 001 507. Ceci n'est cependant qu'un exemple non limitatif de rotor pouvant être associé au stator proposé par la présente invention.

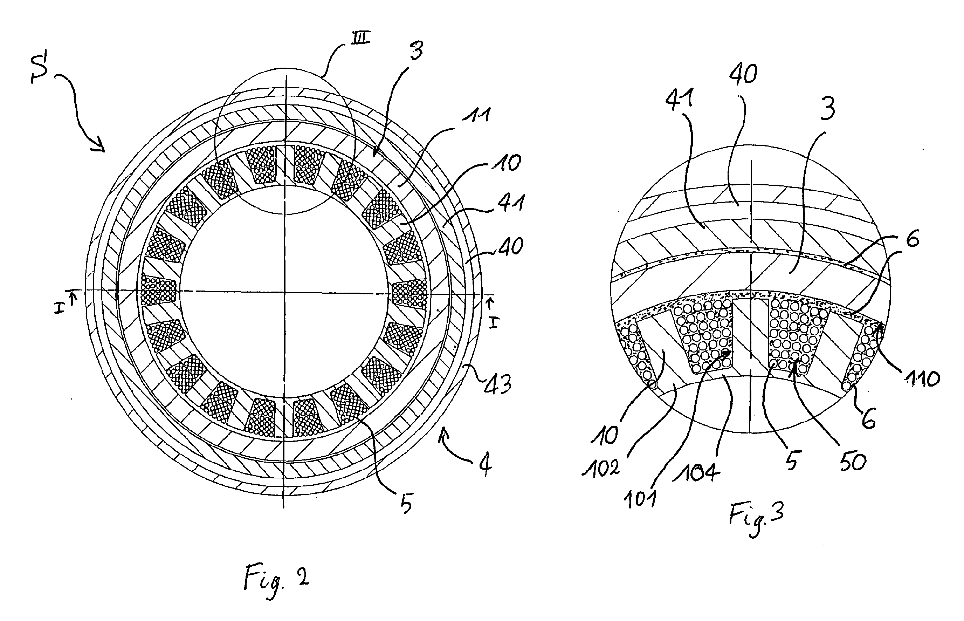

Aux figures 2 et 3, on voit un empilage de culasses 11 réalisées chacun dans une tôle magnétique et disposées sensiblement parallèlement à un plan perpendiculaire à l'axe. L'empilage de culasses 11 forme une enveloppe extérieure 3. On aperçoit une pluralité de dents 10 disposées à l'intérieur de l'enveloppe extérieure 3. Les dents 10 sont disposées sensiblement radialement et délimitent des encoches 50 contenant des fils de cuivre 5 formant les bobinages statoriques.

La forme et la taille des différentes dents sont dictées par des considérations électromagnétiques. La forme et la taille des encoches sont elles-mêmes dictées par le nombre, la forme et la section des conducteurs que l'on veut installer. Les dents sont aussi réalisées chacune dans une tôle magnétique et disposées sensiblement parallèlement à un plan perpendiculaire à l'axe. Les tôles des dents 10 ne sont pas nécessairement disposées en coïncidence des tôles des culasses 11.

Du côté radialement extérieur des encoches 50, apparaissent les parois radialement intérieures 110 des culasses 11. Dans la direction périphérique, de part et d'autre des encoches apparaissent les parois latérales 101 des dents 10. Les fils conducteurs électriques 5 disposés dans les encoches sont noyés dans une résine d'imprégnation 6. A la figure 3, on voit que la même résine 6 est interposée entre chaque dent 10 et chaque culasse 11. Les dents sont ainsi rendues solidaires de l'enveloppe extérieure par collage. Le collage est un mode de réalisation avantageux. On peut cependant rendre les éléments solidaires l'un de l'autre par tout moyen approprié. Citons par exemple le frettage, l'utilisation de cannelures appariées.

On voit plus particulièrement à la figure 3 un aspect de l'invention selon lequel les extrémités radialement intérieures 102 de l'ensemble des dents 10 sont reliées entre elles par une cloison 104, qui occulte l'extrémité radialement intérieure de chaque encoche 50. Dans cette variante de réalisation, la section des encoches 50 par un plan perpendiculaire à l'axe est donc totalement fermée.

L'enveloppe extérieure 3 est montée solidaire d'un fourreau 4 entourant l'enveloppe à l'extérieur de celle-ci. Un circuit 40 destiné à faire circuler un liquide de refroidissement est aménagé dans le fourreau 4 (voir aussi figure 1). A cette fin, le fourreau 4 est constitué par une chemise intérieure 41 comportant à sa surface extérieure un filet 42, et par une chemise extérieure 43. Le circuit 40 est ainsi matérialisé entre les chemises intérieure 41 et extérieure 43 et par le filet 42 créant un circuit en serpentin. On voit un des orifices 44 permettant de raccorder le moteur à une source de fluide de refroidissement.

Le fourreau 4 est rendu solidaire de l'enveloppe 3 par collage assuré par la même résine 6 que la résine d'imprégnation. Le collage n'est qu'un mode de réalisation avantageux. On peut cependant rendre les éléments solidaires l'un de l'autre par tout moyen approprié. Citons par exemple le frettage, le vissage, l'utilisation de cannelures appariées.

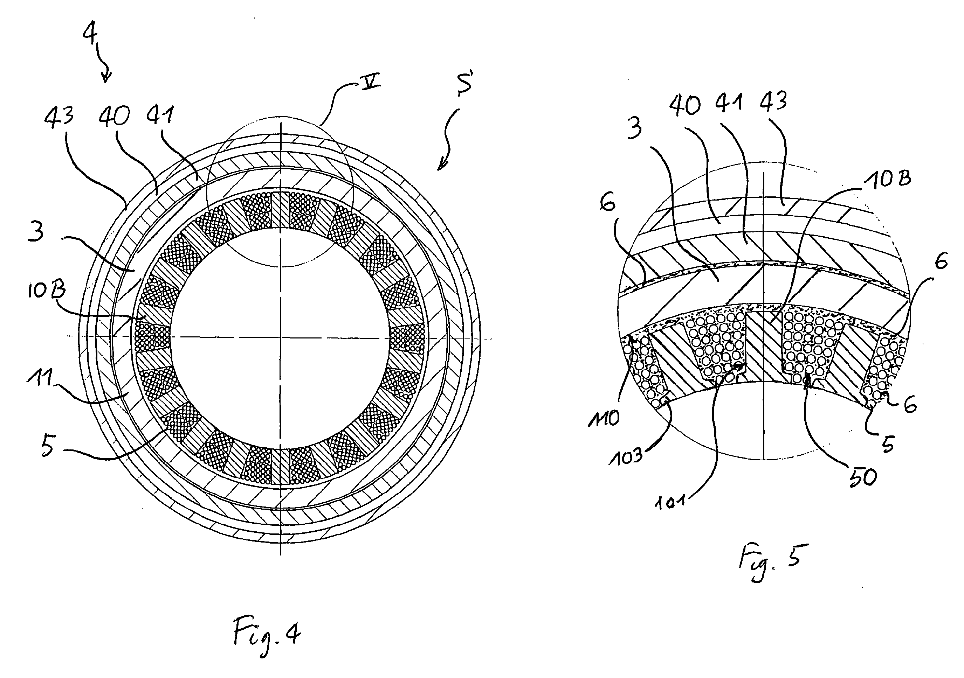

Sous un autre aspect de l'invention, illustré aux figures 4 et 5, les encoches 50 sont ouvertes du côté radialement intérieure. Les dents 10B ne sont pas reliées entre elles. A la figure 5, on voit des pieds d'encoche 103 (non représentés à la figure 4, pour simplifier le dessin). Tous les autres aspects étant identiques à ce qui est illustré aux figures 1 à 3, les mêmes références ont été reprises aux figures 4 et 5. L'enveloppe extérieure 3 est montée solidaire d'un fourreau 4 entourant l'enveloppe à l'extérieur de celle-ci. On peut en effet aménager un circuit 40 destiné à faire circuler un liquide de refroidissement dans le fourreau 4 indépendamment de l'utilisation d'une cloison fermant les encoches du côté de l'entrefer entre rotor et stator.

Par rapport à la conception connue dans l'état de la technique, en se comparant à un volume d'encoche identique, et à une étape de la fabrication du stator, comme cela sera expliqué plus en détail ci-dessous, les encoches sont ouvertes vers l'extérieur au lieu d'être ouvertes vers l'intérieur. Ceci simplifie radicalement l'installation de conducteurs électriques dans les encoches pour deux raisons : l'encoche est bien plus accessible par une ouverture extérieure (l'homme du métier comprend immédiatement que des encoches accessibles par une ouverture à l'extérieur sont bien plus commodes à remplir de conducteurs que des encoches accessibles par une ouverture intérieure). En outre, à section d'encoche comparable, la dimension de l'ouverture d'encoche peut être beaucoup plus grande du côté radialement extérieur. Les parois latérales des dents pouvant être planes, la dimension de l'ouverture d'encoche peut atteindre la largeur de l'encoche à son rayon le plus grand. Ainsi, et ceci est un aspect non limitatif mais intéressant, la largeur des encoches 50, mesurée entre les parois latérales des dents 10 adjacentes, est non décroissante en allant depuis le côté radialement intérieur de l'encoche jusqu'à la paroi intérieure 110 sur l'enveloppe 3.

Les conditions d'installation des conducteurs dans leurs encoches étant ainsi radicalement simplifiées, il est très aisé de concevoir différentes méthodes manuelles et/ou automatiques pour des grandes séries afin de procéder à l'installation des conducteurs proprement dite. On peut procéder en bobinant un conducteur individuel ou en installant des tronçons ou bien en procédant par groupes de conducteurs préconformés ou par toute autre méthode appropriée.

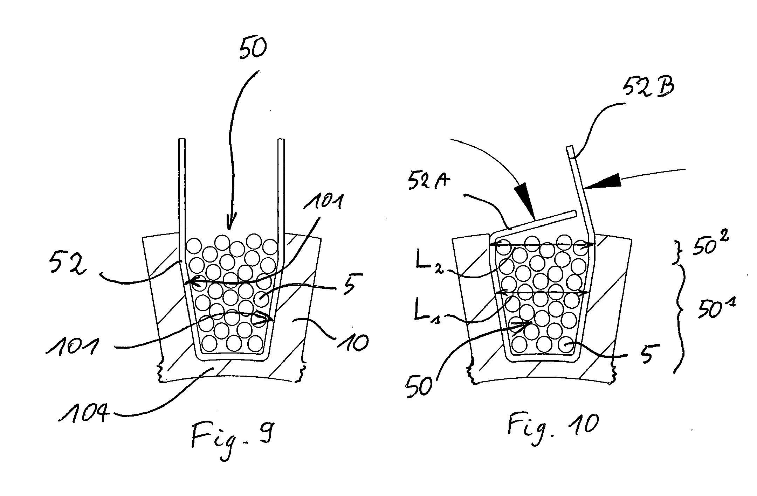

De façon avantageuse mais non limitative, comme illustré aux figures 9 et 10, les encoches 50, observées en allant depuis le côté radialement intérieure de l'encoche jusqu'à la paroi de l'enveloppe, comportent une première partie 50¹ dans laquelle la largeur L₁ des encoches 50 est croissante et comportent une seconde partie 50² dans laquelle la largeur L₂ des encoches 50 est sensiblement constante. Cela favorise la retenue des fils 5 dans les encoches 50 au fur et à mesure de la réalisation in situ du ou des bobinages en insérant les tronçons de fil 5 dans les encoches radialement, depuis l'espace extérieur, comme on va l'expliquer en détail.

Les principales étapes du procédé de fabrication d'un stator de machine électrique tournante, ayant un circuit magnétique feuilleté supportant des bobinages, sont les suivantes :
- découper des tôles en étoile comportant une base circulaire et des dents rayonnantes, faisant protubérance vers l'extérieur et formant une seule pièce avec la base,
- empiler ces tôles sur un manchon de façon à superposer les dents et obtenir un noyau ayant entre les dents des encoches ouvertes vers l'extérieur,
- bobiner les fils conducteurs dans les encoches,
   et par ailleurs,
- découper des tôles culasse en anneau, les dimensions des tôles de culasse et des tôles en étoile étant le cas échéant adaptées l'une à l'autre,
- empiler les culasses de façon à obtenir une enveloppe extérieure,
   ensuite,
- assembler le noyau supportant les bobinages et l'enveloppe extérieure et les rendre solidaires l'un de l'autre,
- démonter le manchon,
- usiner les bases de façon à ajuster le diamètre interne du stator.

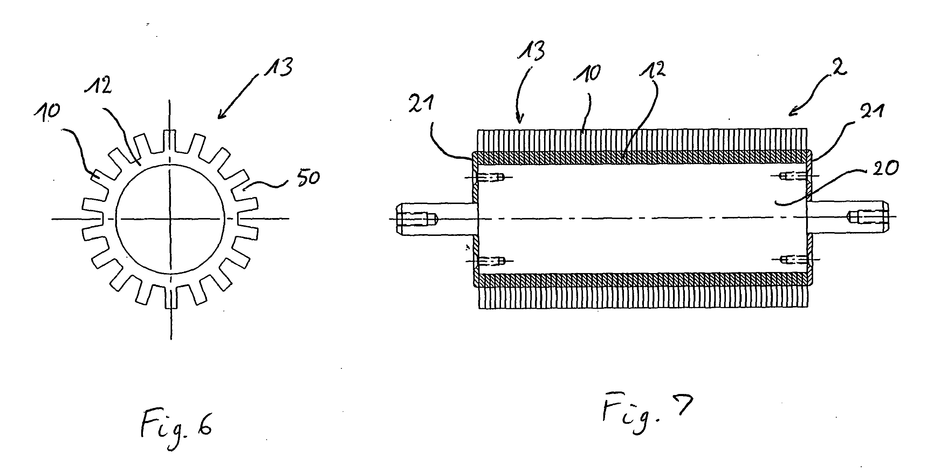

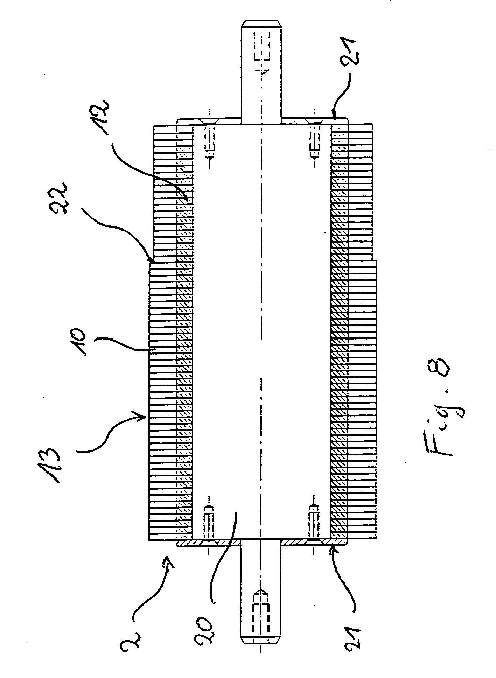

A la figure 6, on voit une tôle découpée en étoile 13, comportant une base circulaire 12 et des dents 10 rayonnantes, faisant protubérance vers l'extérieur et formant une seule pièce avec la base. A la figure 7, on voit un manchon 20 sur lequel on a enfilé les tôles en étoile 13, immobilisées fermement par serrage entre deux flasques 21. Lors du montage des tôles en étoile 13, on oriente les tôles de façon à superposer les dents 10 et obtenir un noyau 2 ayant entre les dents 10 des encoches 50 ouvertes vers l'extérieur. Bien entendu, on peut décaler légèrement entre elles les dents 10 de façon à créer une inclinaison d'encoche comme bien connu par l'homme de l'art. On peut ensuite, si nécessaire, rectifier les tôles en étoile 13 comme schématisé en 22 à la figure 8.

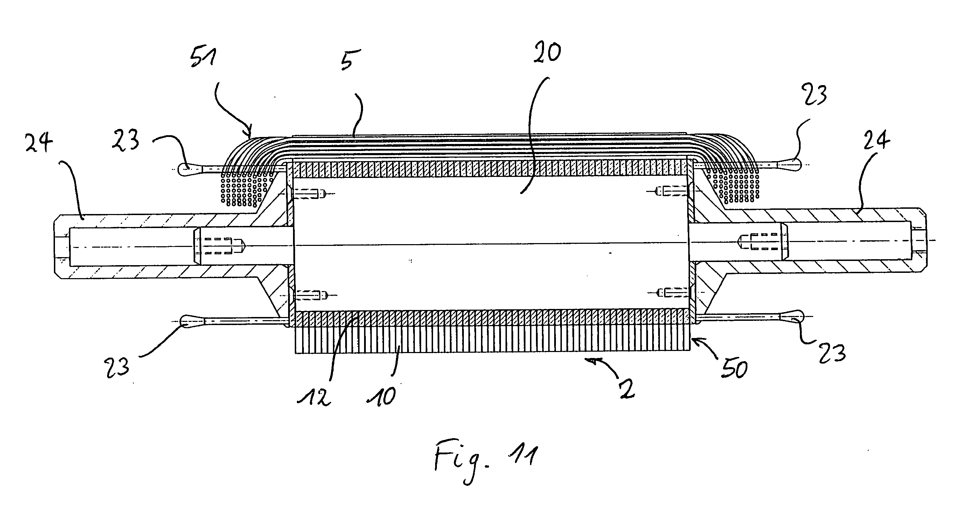

Ensuite, on installe des pions 23 (voir figure 11) sur des supports 24 centrés sur le manchon 20. Les pions 23 aident à bobiner des fils conducteurs 5 dans les encoches 50, en formant des chignons 51 autour des pions 23 comme visualisé à la moitié supérieure de la figure 11.

En option, comme illustré aux figures 9 et 10, on peut en outre recouvrir d'une feuille isolante 52 les parois intérieures des cloisons 104 et parois latérales 101 des dents 10, c'est à dire les parois intérieures d'encoche 50 à ce stade. Dans ce cas, on prévoit donc une étape d'insertion d'une feuille isolante 52 dans chaque encoche 50 avant bobinage des fils conducteurs 5 dans les encoches 50. Les bords 52A et 52B de chaque feuille isolante débordent des dents 10 radialement vers le haut. Les bords 52A et 52B sont rabattus sur le bobinage après réalisation de celui-ci et avant assemblage du noyau 2 avec l'enveloppe extérieure 3. Après rabattage, lesdits bords 52A et 52B se chevauchant l'un sur l'autre partiellement. Bien entendu, cette feuille isolante 52 peut être utilisée indépendamment de la forme d'encoche dont la largeur évolue comme expliqué ci-dessus, et visible aux mêmes figures 9 et 10.

Bien entendu, on peut, avant ou après bobinage, décaler légèrement entre elles les dents 10 de façon à créer une inclinaison d'encoche comme c'est également bien connu par l'homme de l'art.

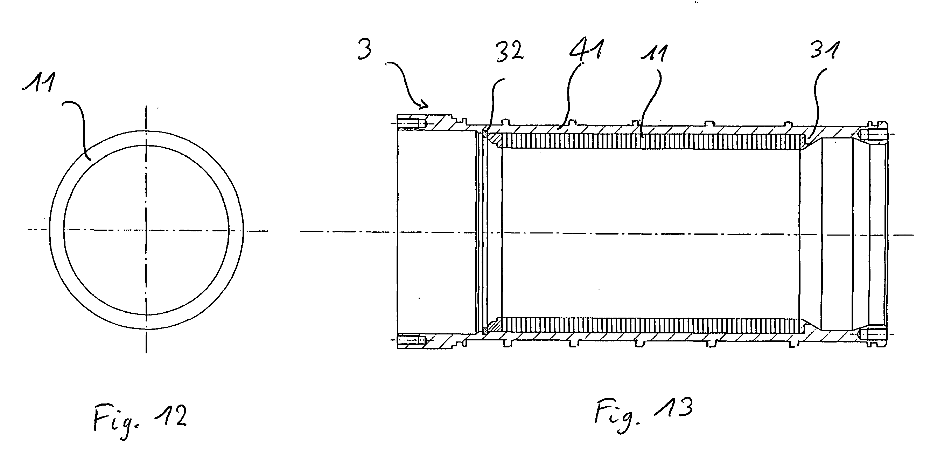

En parallèle des opérations qui viennent d'être décrites, on procède à la préparation de l'autre partie du circuit magnétique statorique. A la figure 12, on voit une tôle culasse 11 découpée en anneau. Ces culasses 11 sont découpées de façon à pouvoir s'ajuster à l'extérieur des tôles en étoile 13, de préférence avec un léger jeu pour une future solidarisation par collage à la résine. A la figure 13, on voit que les culasses 11 sont enfilées dans la chemise intérieure 41 et sont immobilisées entre un épaulement 31 et un circlips 32. Lors du montage des culasses 11, on oriente les tôles sensiblement parallèlement à un plan perpendiculaire à l'axe.

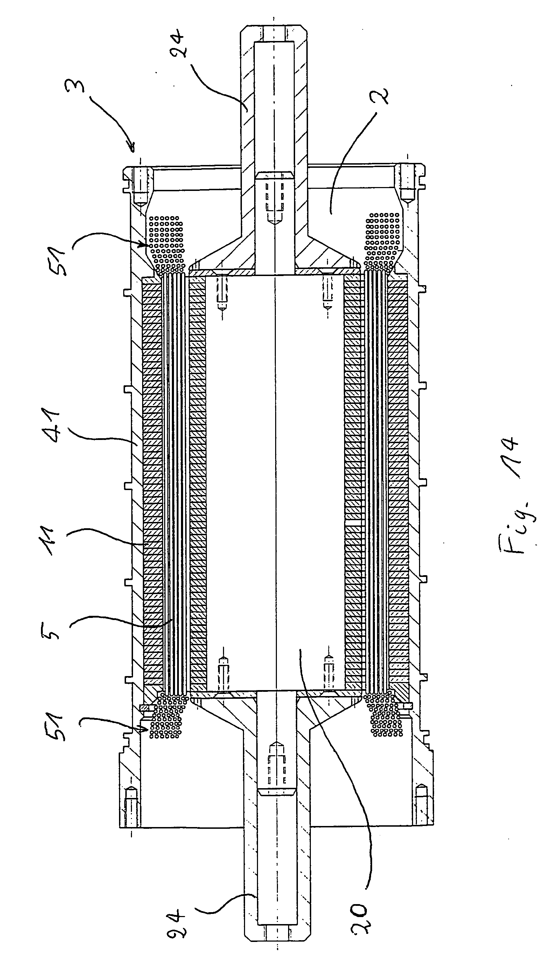

L'empilage des culasses 11 permet d'obtenir une enveloppe 3 extérieure qui ferme le circuit magnétique statorique. A cette fin et comme montré à la figure 14, on assemble le noyau 2 supportant les bobinages et l'enveloppe 3. Après avoir enlevé les pions 23, on relève les chignons 51 en les plaquant vers la chemise intérieure 41 et on enlève les supports 24, pour dégager l'espace nécessaire au rotor et aboutir à la configuration représentée à la figure 14, qui représente les deux parties du circuit magnétique assemblées : le noyau 2 et l'enveloppe 3 comportant les culasses 11. On peut ensuite rendre solidaires tous ces éléments par collage à la résine 6 dans une étape d'imprégnation à la résine des conducteurs 5 dans les encoches. Cette phase d'imprégnation, bien connue en soi de l'homme du métier, remplit ici une fonction supplémentaire : elle rend solidaires les dents 10 et les culasses 11. Les dents et les culasses, qui ont été fabriquées séparément, sont en effet rendues solidaires, avantageusement comme proposé, lors du montage du noyau 2 dans l'enveloppe 3. L'imprégnation assure aussi le collage de l'enveloppe 3 dans le fourreau 4.

Le manchon 20 de la figure 14 étant démonté, on peut usiner jusqu'à dégager une ouverture intérieure pour les différentes encoches. Cependant, on a constaté qu'un pontage de petite dimension assurant une liaison mécanique entre les différentes dents du côté intérieur est sans conséquence d'un point de vue du circuit magnétique car, dans la mesure où l'épaisseur de la tôle ferromagnétique qui subsiste du côté intérieur des différentes encoches est suffisamment petite, on atteint rapidement une saturation magnétique telle que cela reste sans gêne pour le bon fonctionnement de la machine électrique.

En général, afin que le noyau ait la robustesse mécanique nécessaire pour que l'ensemble des pièces subissent les étapes de fabrication sans dommage, on aura prévu de la matière en excès dans la base 12 des tôles en étoile 13. L'étape d'usinage a pour but d'éliminer suffisamment de matière pour supprimer le court-circuit magnétique par la base 12, mais pas nécessairement toute la matière, comme montré aux figures 2 et 3. On usine les bases de façon à ajuster le diamètre interne du stator à ce que l'on souhaite (fonction de la dimension du rotor).

L'invention peut être utilisée indifféremment pour réaliser des moteurs électriques ou bien des alternateurs.

3. Machine électrique tournante selon la revendication 1, dans laquelle les encoches (50) sont ouvertes du côté radialement intérieure, les dents 10B n'étant pas reliées entre elles.

## Revendications

1. Machine électrique tournante comprenant un stator (S) extérieur et un rotor (R) ayant un axe géométrique de rotation et disposé à l'intérieur du stator, ledit stator comprenant un circuit magnétique feuilleté comportant :
• un empilage de culasses (11) réalisées chacune dans une tôle magnétique et disposées sensiblement parallèlement à un plan perpendiculaire à l'axe, l'empilage formant une enveloppe (3) extérieure ;
• une pluralité de dents (10) disposées à l'intérieur de l'enveloppe (3), faisant protubérance vers l'intérieur, les dents étant réalisées chacune dans une tôle magnétique et disposées sensiblement parallèlement à un plan perpendiculaire à l'axe, les dents étant empilées et les empilages de dents délimitant des encoches (50), les dents (10) étant rendues solidaires de l'enveloppe (3) ;
les encoches (50) étant délimitées du côté radialement extérieur par les culasses (11), les encoches étant délimitées dans la direction circonférentielle par les parois latérales (101) des dents (10), des fils conducteurs électriques (5) étant disposés dans les encoches, et comportant un empilage de tôles en étoile (13) réalisées chacune dans une tôle magnétique et disposées sensiblement parallèlement à un plan perpendiculaire à l'axe, l'ensemble des dents apparaissant sur chaque tôle en étoile (13), l'ensemble des dents étant reliées entre elles par une cloison (104B) fermant l'encoche du côté radialement intérieur de l'encoche.

2. Machine électrique tournante selon la revendication 1, dans laquelle l'enveloppe (3) est montée solidaire d'un fourreau (4) entourant l'enveloppe à l'extérieur de celle-ci, un circuit (40) destiné à un liquide de refroidissement étant aménagé dans ledit fourreau.

3. Machine électrique tournante selon l'une des revendications 1 ou 2, dans laquelle l'épaisseur de la cloison du côté radialement intérieur de l'encoche est inférieure à 0,5mm.

4. Machine électrique tournante selon la revendication 3, dans laquelle l'épaisseur de la cloison du côté radialement intérieur de l'encoche est inférieure à 0,4mm.

5. Machine électrique tournante selon l'une des revendications 1 à 4, dans laquelle les dents (10) sont rendues solidaires de l'enveloppe (3) extérieure par collage.

6. Machine électrique tournante selon l'une des revendication 1 à 5, dans laquelle une résine (6) d'imprégnation immobilise les fils électriques conducteurs dans les encoches.

7. Machine électrique tournante selon la revendication 5, dans laquelle une résine (6) d'imprégnation immobilise les fils électriques conducteurs dans les encoches et le collage des dents sur l'enveloppe extérieure est assuré par la même résine que la résine (6) d'imprégnation.

8. Machine électrique tournante selon l'une des revendications 2 à 7, dans laquelle le fourreau (4) est rendu solidaire de l'enveloppe (3) par collage.

9. Machine électrique tournante selon la revendication 6 ou 7, dans laquelle le fourreau (4) est rendu solidaire de l'enveloppe (3) par collage et le collage est assuré par la même résine que la résine (6) d'imprégnation.

10. Machine électrique tournante selon l'une des revendications 1 à 9, dans laquelle la largeur des encoches (50), mesurée entre les parois latérales des dents (10) adjacentes, est non décroissante en allant depuis le côté radialement intérieur de l'encoche jusqu'à la paroi de l'enveloppe (3).

11. Machine électrique tournante selon la revendication 10, dans laquelle les encoches, observées en allant depuis le côté radialement intérieur de l'encoche jusqu'à la paroi de l'enveloppe (3), comportent une première partie dans laquelle la largeur des encoches (50) est croissante et comportent une seconde partie dans laquelle la largeur des encoches (50) est sensiblement constante.

12. Machine électrique tournante selon l'une des revendications 1 à 11, dans laquelle les dents (10) sont légèrement décalées entre elles de façon à obtenir une inclinaison d'encoche.
